# EUROPEAN PATENT SPECIFICATION

(11) **EP 3 414 629 B1**
(45) Date of publication and mention of the grant of the patent: **25.03.2020**
(21) Application number: 16738104.5
(22) Date of filing: 06.07.2016
(51) Int. Cl.: G03G 15/16

(54) **RELEASE LAYER**
TRENNSCHICHT
COUCHE DE LIBÉRATION

(43) Date of publication of application: 19.12.2018
(73) Proprietor: HP Indigo B.V., 1187 XR Amstelveen (NL)
(72) Inventor: LIBSTER, Dima, 76101 Nes Ziona (IL); SLIVNIAK, Raia, 76101 Nes Ziona (IL); INOTAEV, Sergey, 76101 Nez Ziona (IL); KAHATABI, Rafael, 76101 Nes Ziona (IL)
(74) Representative: Haseltine Lake Kempner LLP
(86) International application number: PCT/EP2016/066034
(87) International publication number: WO 2018/006956

(56) References cited:
- WO-A1-2016/066232
- WO-A1-2016/066233

## Description

### Background

Electrostatic printing processes may involve creating a latent electrostatic image on a photoconductive surface, applying an imaging material having charged particles to the photoconductive surface such that the charged particles selectively bind to the latent electrostatic image while the background areas remain clean, and then transferring the charged particles in the form of the image to a print substrate.

The photoconductive surface may be on a cylinder and is often termed a photo-imaging plate (PIP). The photoconductive surface is selectively charged with a latent electrostatic image having image and background areas with different potentials. For example, an electrostatic ink composition comprising charged ink particles in a carrier liquid can be brought into contact with the selectively charged photoconductive surface. The charged ink particles adhere to the image areas of the latent image while the background areas remain clean. The image is then transferred to a print substrate (e.g. paper).

Electrostatic printing systems sometimes employ an intermediate transfer member (ITM) to transfer the charged particles, for example charged ink particles in a carrier liquid, from a photoconductive surface to a print substrate. The ITM may include a release layer which may absorb some of the liquid carrier and facilitate releasing of the charged ink particles to the print substrate.

Some previous ITM release layers have been found to suffer from negative dot gain memory and/or short term memory. Relevant prior art documents are WO2016/066233 and WO2016/066232.

### Brief Description of the Figures

Figure 1 is a cross-sectional diagram of an example of an intermediate transfer member (ITM) comprising a release layer;
Figure 2 is a cross-sectional diagram of an example of an ITM;
Figure 3 is a schematic illustration of a Liquid Electro Photographic (LEP) printing apparatus;
Figure 4 is a graph showing the viscosity of a pre-cure release formulation as a function of amount of trisiloxane surfactant;
Figure 5a is an optical microscopy micrograph of a formulation comprising silicone oil and carbon black;
Figure 5b is an optical microscopy micrograph of a pre-cure release composition comprising silicone oil, carbon black and a trisiloxane surfactant;
Figure 6 provides an illustration of a printed image, where K denotes black, Y denotes yellow, M denotes magenta, and C denotes cyan; and
Figure 7 provides an illustration of a printed image.

### Detailed Description

Before the compositions, release layers, intermediate transfer members (ITMs), methods and related aspects of the disclosure are disclosed and described, it is to be understood that this disclosure is not restricted to the particular process features and materials disclosed herein because such process features and materials may vary somewhat. It is also to be understood that the terminology used herein is used for the purpose of describing particular examples. The terms are not intended to be limiting because the scope is intended to be limited by the appended claims.

It is noted that, as used in this specification and the appended claims, the singular forms "a," "an," and "the" include plural referents unless the context clearly dictates otherwise.

As used herein, a "liquid electrophotographic ink" or "LEP ink" generally refers to an ink composition, in liquid form, generally suitable for use in a liquid electrostatic printing process, sometimes termed a liquid electrophotographic (LEP) printing process. The LEP ink may include chargeable particles of a resin and a pigment/colourant dispersed in a liquid carrier, which may be as described herein.

The LEP inks referred to herein may comprise a colourant and a thermoplastic resin dispersed in a carrier liquid. In some examples, the thermoplastic resin may comprise an ethylene acrylic acid resin, an ethylene methacrylic acid resin or combinations thereof. In some examples, the electrostatic ink also comprises a charge director and/or a charge adjuvant. In some examples, the liquid electrostatic inks described herein may be Electrolnk® and any other Liquid Electro Photographic (LEP) inks developed by Hewlett-Packard Company.

As used herein, "liquid carrier", "carrier liquid", "carrier," or "carrier vehicle" refers to the fluid in which resin, pigment, charge directors and/or other additives can be dispersed to form a liquid electrostatic ink or electrophotographic ink. The carrier liquid may include a mixture of a variety of different agents, such as surfactants, co-solvents, viscosity modifiers, and/or other possible ingredients. The carrier liquid can include or be a hydrocarbon, silicone oil, vegetable oil, etc. The carrier liquid can include, for example, an insulating, non-polar, non-aqueous liquid that can be used as a medium for the first and second resin components. The carrier liquid can include compounds that have a resistivity in excess of about 10⁹ ohm•cm. The carrier liquid may have a dielectric constant below about 5, in some examples below about 3. The carrier liquid may include hydrocarbons. In some examples, the carrier liquid comprises or consists of, for example, Isopar-G™, Isopar-H™, Isopar-L™, Isopar-M™, Isopar-K™, Isopar-V™, Norpar 12™, Norpar 13™, Norpar 15™, Exxol D40™, Exxol D80™, Exxol D100™, Exxol D130™, and Exxol D140™ (each sold by EXXON CORPORATION).

As used herein, "co-polymer" refers to a polymer that is polymerized from at least two monomers.

All viscosities described herein are viscosities determined at 25 °C unless stated otherwise.

Viscosities described herein may be determined according to ASTM D4283 - 98(2010) Standard Test Method for Viscosity of Silicone Fluids. In some examples, viscosities described herein may be measured on a viscometer, such as a Brookfield DV-II+ Programmable viscometer, using appropriate spindles, including, but not limited to, a spindle selected from spindle LV-4 (SP 64) 200-1,000 [mPa•s] for Newtonian fluids (pure silicones) and spindle LV-3 (SP 63) 200 - 800000 [mPa•s] for non-Newtonian fluids (silicone oils with carbon black).

A certain monomer may be described herein as constituting a certain weight percentage of a polymer. This indicates that the repeating units formed from the said monomer in the polymer constitute said weight percentage of the polymer.

If a standard test is mentioned herein, unless otherwise stated, the version of the test to be referred to is the most recent at the time of filing this patent application.

As used herein, "electrostatic(ally) printing" or "electrophotographic(ally) printing" generally refers to the process that provides an image that is transferred from a photo imaging substrate or plate either directly or indirectly via an intermediate transfer member to a print substrate, e.g. a paper substrate. As such, the image is not substantially absorbed into the photo imaging substrate or plate on which it is applied. Additionally, "electrophotographic printers" or "electrostatic printers" generally refer to those printers capable of performing electrophotographic printing or electrostatic printing, as described above. "Liquid electrophotographic printing" is a specific type of electrophotographic printing where a liquid ink is employed in the electrophotographic process rather than a powder toner. An electrostatic printing process may involve subjecting the electrophotographic ink composition to an electric field, e.g. an electric field having a field strength of 1000 V/cm or more, in some examples 1000 V/mm or more.

As used herein, the term "about" is used to provide flexibility to a numerical range endpoint by providing that a given value may be a little above or a little below the endpoint. The degree of flexibility of this term can be dictated by the particular variable.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the end points of the range, but also to include all the individual numerical values or sub-ranges encompassed within that range as if each numerical value and sub-range is explicitly recited. As an illustration, a numerical range of "about 1 wt% to about 5 wt%" should be interpreted to include not just the explicitly recited values of about 1 wt% to about 5 wt%, but also include individual values and subranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.

Unless otherwise stated, any feature described herein can be combined with any aspect or any other feature described herein.

In an aspect, there is provided a pre-cure release layer composition comprising at least one silicone oil; carbon black; and a trisiloxane surfactant.

Also described herein is a method for preparing a pre-cure release layer composition, the method comprising combining a silicone oil, carbon black and a trisiloxane surfactant.

Also described herein is a method of providing a release layer, the method comprising: combining a silicone oil, carbon black and a trisiloxane surfactant to form a pre-cure release layer composition; and curing the pre-cure release layer composition to form a release layer comprising a silicone polymer matrix, carbon black and a trisiloxane surfactant.

In another aspect, there is provided an intermediate transfer member for use in an electrostatic printing processes, the intermediate transfer member comprising an outer release layer comprising a silicone polymer matrix, carbon black and a trisiloxane surfactant.

In another aspect, there is provided an electrostatic printing apparatus comprising:
a photoconductive member having a surface on which a latent electrostatic image can be created; and
an intermediate transfer member comprising an outer release layer comprising a silicone polymer matrix, carbon black and a trisiloxane surfactant,
wherein the electrostatic printing apparatus is adapted, in use, on contacting the surface of the photoconductive member with an electrostatic ink composition to form a developed image on the surface of the latent electrostatic image, then transfer the developed image to the outer release layer of intermediate transfer member, and then transfer the developed image from the outer release layer of the intermediate transfer member to a print substrate.

The present inventors have surprisingly found that increasing the amount of carbon black in an outer release layer of an intermediate transfer member has a positive effect on the memory of an intermediate transfer member. The present inventors have also found that the amount of carbon black in an outer release layer of an intermediate transfer member can be increased by including a trisiloxane surfactant in the release layer composition and that a trisiloxane surfactant may also be used to improve dispersion of carbon black in a release layer.

### Pre-cure release layer composition

The pre-cure release layer composition may comprise a silicone oil, carbon black and a trisiloxane surfactant. In some examples, the pre-cure release layer composition further comprises a volatile solvent, such as isopropanol or ethanol. In some examples, the pre-cure release layer composition comprises a cross-linker, for example, a cross-linker comprising a silicon hydride moiety. In some examples, the pre-cure release layer composition comprises a cross-linking catalyst.

The pre-cure release layer composition may be cured to form a release layer, for example, the pre-cure release layer composition may be applied to a supportive portion of an intermediate transfer member and then cured to form an outer release layer on the supportive portion of the intermediate transfer member.

In some examples the pre-cure release composition has a dynamic viscosity of 500 mPa.s or more, in some examples 1000 mPa•s or more, in some examples 2000 mPa•s or more, in some examples 3000 mPa•s or more, in some examples 4000 mPa•s or more, in some examples 5000 mPa•s or more, in some examples 6000 mPa•s or more. In some examples the pre-cure release composition has a dynamic viscosity of 50 000 mPa.s or less. mples the pre-cure release composition has a dynamic viscosity of 500 to 50 000 mPa•s, in some examples 1000 to 50 000 mPa•s, in some examples 5000 to 50 000 mPa•s. Pre-cure release compositions having these viscosities can be gravure coated onto an ITM base.

### Silicone Oil

In some examples, the silicone oil comprises a silicone chain to which alkene groups are linked. In some examples, the silicone oil comprises a polysiloxane having at least two alkene groups per molecule. In some examples, the pre-cure release layer composition comprises a silicone oil having alkene groups linked to the silicone chain of the silicone oil and a cross-linker comprising a silicon hydride moiety. In some examples, such composition, on curing, may form a release layer comprising the cross-linked addition cured product of at least one silicone oil having alkene groups linked to the silicone chain of the silicone oil and a cross-linker comprising a silicon hydride moiety.

In some examples, the silicone oil comprises a polydimethlysiloxane.

In some examples, the silicone oil has the formula (I): 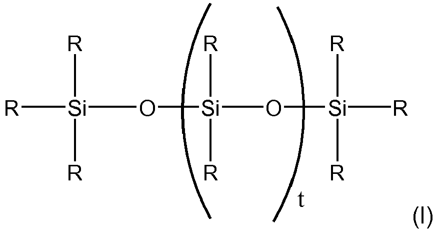 wherein:
each R is independently selected from C₁₋₆ alkyl and C₂₋₆ alkenyl groups, at least two R groups being an alkenyl group; and
t is an integer of at least 1, in some examples at least 10, in some examples at least 100.
In some examples, the alkenyl groups are vinyl groups and the alkyl groups are methyl groups.

In some embodiments the silicone oil has a dynamic viscosity of 100 mPa.s or more, in some examples 200 mPa•s or more, in some examples 300 mPa•s or more, in some examples 400 mPa•s or more.

In some embodiments the silicone oil has a dynamic viscosity of 5000 mPa.s or less, in some examples 1000 mPa•s or less, in some examples 900 mPa•s or less, in some examples 800 mPa•s or less, in some examples 700 mPa•s or less, in some examples 600 mPa•s or less.

In some embodiments the silicone oil has a dynamic viscosity of 100 to 5000 mPa.s, in some examples 100 to 1000 mPa•s, in some examples 200 to 1000 mPa•s, in some examples 200 to 900 mPa•s, in some examples 300 to 800 mPa•s, in some examples 400 to 700 mPa•s, in some examples 400 to 600 mPa•s, in some examples about 500 mPa•s.

In some examples, the silicone oil comprises a dimethylsiloxane homopolymer, in which the alkene groups are vinyl, and are each covalently bonded to end siloxyl units. In some examples, the silicone oil comprises a dimethylsiloxane homopolymer of the α,ω(dimethyl-vinylsiloxy)poly(dimethylsiloxyl) type. In some examples, the dimethylsiloxane homopolymer has a dynamic viscosity of at least 100 mPa•s. In some examples, the dimethylsiloxane homopolymer has a dynamic viscosity of from 100 to 1000 mPa•s, in some examples 200 to 900 mPa•s, in some examples 300 to 800 mPa•s, in some examples 400 to 700 mPa•s, in some examples 400 to 600 mPa•s, in some examples about 500 mPa•s.

In some example, the silicone oil comprises a co-polymer of vinylmethylsiloxane and dimethylsiloxane, and in some examples, a vinyl group is covalently bonded to each of the end siloxyl units of the co-polymer. In some examples the co-polymer of vinylmethylsiloxane and dimethylsiloxane is of the poly(dimethylsiloxyl)((methylvinylsiloxy)α,ω(dimethyl-vinylsiloxy) type.

In some examples, the silicone oil comprises a dimethylsiloxane homopolymer, in which the alkene groups are vinyl, and are each covalently bonded to end siloxyl units, which may be as described above and a co-polymer of vinylmethylsiloxane and dimethylsiloxane, and, in some examples a vinyl group is covalently bonded to each of the end siloxane units of the co-polymer.

In some examples, the co-polymer of vinylmethylsiloxane and dimethylsiloxane has a dynamic viscosity of from 1000 to 5000 mPa•s. In some examples, the co-polymer of vinylmethylsiloxane and dimethylsiloxane has a dynamic viscosity of from 2000 to 4000 mPa•s, in some examples a dynamic viscosity of from 2500 to 3500 mPa•s, in some examples a dynamic viscosity of about 3000 mPa•s.

In some examples, the silicone oil is a siloxane, in some examples a hydroxyl-functional siloxane, in some examples a hydroxyl-terminated siloxane, in some examples a siloxane having at least one hydroxyl group per molecule, in some examples at least two hydroxyl groups per molecule.

In some examples, the pre-cure release layer composition comprises at least about 40 wt.% silicone oil, for example at least about 50 wt.% silicone oil, at least about 60 wt.% silicone oil, at least about 70 wt.% silicone oil, or at least about 80 wt.% silicone oil by total weight of the composition. In some examples, the pre-cure release composition comprises up to about 98 wt.% silicone oil by total weight of the composition, for example up to about 95 wt.%, up to about 90 wt.%, up to about 85 wt.%, up to about 80 wt.%, or up to about 75 wt.% of silicone oil by total weight of the composition. In some examples the pre-cure release layer composition comprises from about 50 wt.% to about 98 wt.% silicone oil by total weight of the composition.

### Carbon Black

In some examples, pre-cure release layer composition comprises greater than about 1.0 wt.% carbon black by total weight of silicone oil, for example at least about 1.1 wt.% carbon black, at least about 1.2 wt.% carbon black, at least about 1.3 wt.% carbon black, at least about 1.4 wt.% carbon black, at least about 1.5 wt.% carbon black, at least about 1.6 wt.% carbon black, at least about 1.7 wt.% carbon black, at least about 1.8 wt.% carbon black, at least about 1.9 wt.% carbon black, at least about 2 wt.%, or 2.0 wt.%, carbon black, at least about 2.1 wt.% carbon black, at least about 2.2 wt.% carbon black, at least about 2.3 wt.% carbon black, at least about 2.4 wt.% carbon black, or at least about 2.5 wt.% carbon black.

In some examples, the pre-cure release layer composition comprises up to about 10 wt % carbon black by total weight of silicone oil, for example, up to about 9 wt%, up to about 8 wt%, up to about 7 wt%, up to about 6 wt%, up to about 5 wt %, up to about 4 wt%, up to about 3.5 wt.%, or up to about 3 wt% carbon black by total weight of silicone oil.

In some examples, the pre-cure release layer composition comprises from about 1.0 wt.% to about 10 wt.% carbon black by total weight of silicone oil, for example from about 1.5 wt.% to about 5 wt.%, or from about 2 wt.% to about 3.5 wt.% carbon black by total weight of silicone oil.

In some examples, the carbon black is a conductive carbon black.

In some examples, the carbon black has a BET surface area of 600 m²/g or greater, in some examples 800 m²/g or greater, in some examples 1000 m²/g or greater, in some examples 1200 m²/g or greater, in some examples 1300 m²/g or greater, in some examples 1400 m²/g or greater. The BET surface area of the carbon black may be determined according to ASTM Standard D6556-14.

In some examples, the carbon black comprises particles of which at least some have a primary particle diameter of about 50 nm or less, in some examples about 45 nm or less, in some examples about 42 nm or less, in some examples about 40 nm or less, in some examples about 38 nm or less, in some examples about 36 nm or less, in some examples about 35 nm or less, in some examples about 34 nm or less. In some examples, the carbon black comprises particles of which at least some have a primary particle diameter in the range of about 20 nm to about 50 nm. The primary particle diameter of carbon black particles may be determined using transmission electron microscopy.

In some examples, the mean primary particle diameter of the carbon black is about 50 nm or less, in some examples about 45 nm or less, in some examples about 42 nm or less, in some examples about 40 nm or less, in some examples about 38 nm or less, in some examples about 36 nm or less, in some examples about 35 nm or less, in some examples about 34 nm or less. The mean particle diameter of carbon black may be determined according to ASTM standard D3849.

In some examples, the carbon black has about 10 x 10¹⁵ primary particles per gram or more, in some examples about 15 x 10¹⁵ primary particles per gram or more, in some examples about 20 x 10¹⁵ primary particles per gram or more, in some examples about 30 x 10¹⁵ primary particles per gram or more, in some examples about 40 x 10¹⁵ primary particles per gram or more, in some examples about 50 x 10¹⁵ primary particles per gram or more, in some examples about 70 x 10¹⁵ primary particles per gram or more, in some examples about 90 x 10¹⁵ primary particles per gram or more, in some examples about 100 x 10¹⁵ primary particles per gram or more, in some examples about 110 x 10¹⁵ primary particles per gram or more.

In some examples, the carbon black may have a dibutyl phthalate absorption number (DBPA) of at least 200 ml/100 g, in some examples a DBPA number of at least 250 ml/100 g, in some examples a DBPA number of at least 300 ml/100 g, in some examples a DBPA number of at least 350 ml/100 g, in some examples a DBPA number of at least 400 ml/100 g, in some examples a DBPA number of at least 450 ml/100 g, in some examples a DBPA number of at least 475 ml/100 g. Dibutyl phthalate absorption number (DBPA) may be measured, for example, using a standard test, such as ASTM D2414 - 13a.

### Trisiloxane Surfactant

The pre-cure release layer composition may comprise a trisiloxane surfactant. In some examples, the trisiloxane surfactant has a hydrophilic-lipophilic balance (HLB) in the range of about 9 to about 13, for example in the range of about 10 to about 12. In some examples, the HLB number may be determined using Griffin's method (HLB = 20*Mₕ/M, where Mₕ is the molecular mass of the hydrophilic portion of the molecule and M is the molecular mass of the whole molecule).

In some examples, the trisiloxane surfactant comprises a polyalkyleneoxide modified trisiloxane, for example a polyalkyleneoxide modified heptametyltrisiloxane.

In some examples, the trisiloxane surfactant comprises a compound of formula (II) 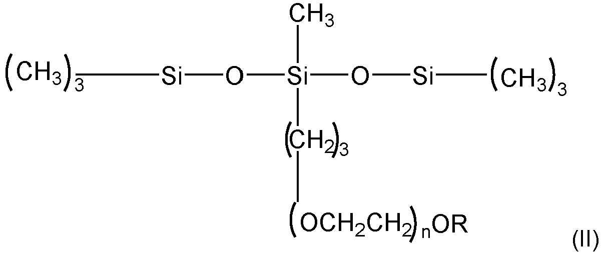
where n is an integer, for example an integer of at least 1, for example from about 1 to about 12; and
R is alkyl, for example C₁₋₆ alkyl, C₁₋₄ alkyl, such as methyl, ethyl, propyl or butyl.

In some examples, the pre-cure release composition comprises greater than about 1.0 wt.% trisiloxane surfactant by total weight of silicone oil, for example at least about 1.1 wt.% trisiloxane surfactant, at least about 1.2 wt.% trisiloxane surfactant, at least about 1.3 wt.% trisiloxane surfactant, at least about 1.4 wt.% trisiloxane surfactant, at least about 1.5 wt.% trisiloxane surfactant, at least about 1.6 wt.% trisiloxane surfactant, at least about 1.7 wt.% trisiloxane surfactant, at least about 1.8 wt.% trisiloxane surfactant, at least about 1.9 wt.% trisiloxane surfactant, at least about 2 wt.%, or 2.0 wt.%, trisiloxane surfactant, at least about 2.1 wt.% trisiloxane surfactant, at least about 2.2 wt.% trisiloxane surfactant, at least about 2.3 wt.% trisiloxane surfactant, at least about 2.4 wt.% trisiloxane surfactant, or at least about 2.5 wt.% trisiloxane surfactant.

In some examples, the pre-cure release layer composition comprises up to about 10 wt % trisiloxane surfactant by total weight of silicone oil, for example, up to about 9 wt%, up to about 8 wt%, up to about 7 wt%, up to about 6 wt%, up to about 5 wt %, up to about 4 wt%, up to about 3.5 wt.%, or up to about 3 wt% trisiloxane surfactant by total weight of silicone oil.

In some examples, the pre-cure release layer composition comprises from about 1.0 wt.% to about 10 wt.% trisiloxane surfactant by total weight of silicone oil, for example from about 1.5 wt.% to about 5 wt.%, or from about 2 wt.% to about 3.5 wt.% trisiloxane surfactant by total weight of silicone oil.

In some examples, the pre-cure release compositions comprises carbon black and a trisiloxane surfactant in a ratio of about 3:1 to about 1:3, for example about 2:1 to about 1: 2, or about 1:1 by weight.

### Cross-linker

In some examples, the pre-cure release layer composition comprises a cross-linker. In some examples, the pre-cure release layer composition comprises an addition cure cross-linker component, a condensation cure cross-linker compounding, a photo cross-linker component, or a cross-linker comprising a peroxide component.

In some examples, the cross-linker may be an addition cure cross-linker component, such as a cross-linker comprising a silicon hydride (Si-H) moiety. In such cases, the silicone oil may comprise a silicone chain to which alkene groups are linked, for example a polysiloxane having at least two alkene groups per molecule. In some examples, the cross-linker comprising a silicon hydride moiety comprises a polysiloxane having a silicon hydride moiety. The silicon hydride moiety may be at an end siloxyl unit or an intermediate siloxyl unit in the polysiloxane of the second component; and in some examples, all other substituents attached to the silicon atoms of the polysiloxane having a silicon hydride (Si-H) moiety are unsubstituted alkyl or unsubstituted aryl groups. In some examples, the cross-linker comprising a silicon hydride moiety is selected from a polysiloxane of the poly(dimethylsiloxy)-(siloxymethylhydro)-α,ω-(dimethylhydrosiloxy) type and α,ω-(dimethylhydrosiloxy) poly-dimethylsiloxane. In some examples, the polysiloxane having a silicon hydride (Si-H) moiety has a dynamic viscosity of at least 100 mPa•s, in some examples at least 500 mPa•s. In some examples, the polysiloxane having a silicon hydride (Si-H) moiety has a dynamic viscosity of from 100 mPa•s to 2000 mPa•s, in some examples a dynamic viscosity of from 300 mPa•s to 1500 mPa•s, in some examples a dynamic viscosity of from 500 mPa•s to 1300 mPa•s, in some examples a dynamic viscosity of from 700 mPa•s to 1100 mPa•s, in some examples a dynamic viscosity of from 800 mPa•s to 1000 mPa•s, in some examples a dynamic viscosity of around 900 mPa•s.

In some examples the condensation cure cross-linker component is an acetoxy silane component, an alkoxy silane component, an oxime component, an enoxy silane component, an amino silane component, or a benzamido silane component. The at least one silicone oil may be a siloxane, in some examples a hydroxyl-functional siloxane, in some examples a hydroxyl-terminated siloxane, in some examples a siloxane having at least one hydroxyl group per molecule, in some examples at least two hydroxyl groups per molecule.

### Cross-linking catalyst

In some examples, the pre-cure release layer composition may comprise a cross-linking catalyst. In some examples, the pre-cure release layer composition may comprise an addition cure cross-linking catalyst, a condensation cure cross-linking catalyst, or an activated cure cross-linking catalyst.

In some examples, the pre-cure release layer composition comprises a silicone oil, carbon black, a trisiloxane surfactant, a cross-linker comprising a silicon hydride moiety and a cross-linking catalyst, e.g. an addition cure cross-linking catalyst such as a catalyst comprising platinum or rhodium, in some examples the catalyst comprises platinum. In some examples the silicone oil comprises a polysiloxane having at least two alkene groups per molecule.

In some examples, the pre-cure release layer composition comprises a silicone oil, carbon black, a trisiloxane surfactant, a condensation cure cross-linker component and a cross-linking catalyst, e.g. a condensation cure cross-linking catalyst such as a catalyst comprising titanium. In some examples the silicone oil is a siloxane, in some examples a hydroxyl-functional siloxane, in some examples a hydroxyl-terminated siloxane, in some examples a siloxane having at least one hydroxyl group per molecule, in some examples at least two hydroxyl groups per molecule.

In some examples, the pre-cure release layer composition comprises a silicone oil, carbon black, a trisiloxane surfactant, a photo cross-linker and a photo-initiator.

In some examples, the pre-cure release layer composition comprises a silicone oil, carbon black, a trisiloxane surfactant, a cross-linker comprising a peroxide component and an activated cure cross-linking catalyst.

### Volatile Solvent

In some examples, the pre-cure release layer composition comprises a volatile solvent.

In some examples, the pre-cure release layer composition comprises a volatile solvent in such an amount to provide a pre-cure release layer composition having a dynamic viscosity of 50 000 mPa•s or less. In some examples, pre-cure release layer composition comprises a volatile solvent in such an amount to provide a pre-cure release layer composition having a dynamic viscosity of 500 mPa.s or more, in some examples 1000 mPa•s or more, in some examples 2000 mPa•s or more, in some examples 3000 mPa•s or more, in some examples 4000 mPa•s or more, in some examples 5000 mPa•s or more, in some examples 6000 mPa•s or more. In some examples, the pre-cure release layer composition comprises a volatile solvent in such an amount to provide a pre-cure release layer composition having dynamic viscosity of 500 to 50 000 mPa•s, in some examples 1000 to 50 000 mPa•s, in some examples 5000 to 50 000 mPa•s.

In some examples, the pre-cure release layer composition comprises at least about 30 wt.% of a volatile solvent by total weight of the silicone oil, for example at least about 40 wt.%, at least about 50 wt.%, at least about 60 wt.%, or at least about 70 wt.% volatile solvent by total weight of the silicone oil.

In some examples, the volatile solvent is a solvent having a boiling point of less than about 100 °C, for example less than about 95 °C, less than about 90°C, less than about 85 °C, or less than about 83 °C when measured at standard pressure (1 atm). In some examples, the volatile solvent is an alcohol, e.g. an alcohol having a boiling point of less than about 100 °C when measured at standard pressure, such as isopropanol or ethanol. In some examples, the volatile solvent is ethanol.

### Method of providing a pre-cure release layer composition

The method of preparing a pre-cure release layer composition may comprise combining a silicone oil, carbon black and a trisiloxane surfactant. In some examples, the silicone oil, carbon black and a trisiloxane surfactant are combined to provide a dispersion comprising silicone oil containing carbon black and a trisiloxane surfactant dispersed therein.

In some examples, combining a silicone oil, carbon black and a trisiloxane surfactant may comprise dispersing the carbon black in the silicone oil, for example using high shear mixing. In some examples, the silicone oil, carbon black and trisiloxane surfactant may all be combined and then be subjected to high shear mixing. In some examples, combining a silicone oil, carbon black and a trisiloxane surfactant comprises high shear mixing of the silicone oil, carbon black and trisiloxane surfactant.

In some examples, the silicone oil, carbon black and a trisiloxane surfactant are combined by applying shear rate of about 3000 rpm or greater, for example about 4000 rpm or greater, about 5000 rpm or greater or about 6000 rpm of greater to provide a silicone oil having carbon black and a trisiloxane surfactant dispersed therein. In some examples the shear rate is applied for at least 3 minutes, in some examples at least 5 minutes, in some examples at least 6 minutes.

In some examples, the dispersion comprising silicone oil containing carbon black and a trisiloxane surfactant dispersed therein has a dynamic viscosity of greater than about 100 000 mPa•s, for example greater than about 200 000 mPa•s, greater than about 300 000 mPa•s, greater than about 400 000 mPa•s, greater than about 500 000 mPa•s, greater than about 600 000 mPa•s, or greater than about 700 000 mPa•s. In some examples, the dispersion comprising silicone oil containing carbon black and a trisiloxane surfactant dispersed therein has a dynamic viscosity of up to about 800 000 mPa•s. In some examples, the dispersion comprising silicone oil containing carbon black and a trisiloxane surfactant dispersed therein has a dynamic viscosity in the range of about 400 000 mPa•s to about 800 000 mPa•s.

In some examples, the method of forming a pre-cure release layer composition comprises adding a volatile solvent to the pre-cure release layer composition. The method may comprise adding a volatile solvent to the pre-cure release layer composition to reduce the viscosity of the pre-cure release layer, for example to reduce the dynamic viscosity of the pre-cure release layer to less than about 50 000 mPa•s. In some examples, the method comprises adding a volatiles solvent to the pre-cure release layer composition comprises a volatile solvent in such an amount to reduce the dynamic viscosity of the pre-cure release layer to a dynamic viscosity in the range of about 200 to about 50 000 mPa•s, for example about 500 to about 50 000 mPa•s, or about 1000 to about 50 000 mPa•s.

In some examples, the volatile solvent may be added to the silicone oil, carbon black and trisiloxane surfactant after dispersion of the carbon black and trisiloxane surfactant in the silicone oil.

In some examples, a cross-linker component is added to the pre-cure release layer composition. The cross-linker component may be added to the pre-cure release layer composition prior to or after dispersion of the carbon black and trisiloxane surfactant in the silicone oil.

In some examples a cross-linking catalyst is added to the pre-cure release layer composition. The cross-linking catalyst may be added to the pre-cure release layer composition prior to or after dispersion of the carbon black and trisiloxane surfactant in the silicone oil.

### Method of providing a release layer

A method of providing a release layer may comprise: combining at least one silicone oil, carbon black and a trisiloxane surfactant to form a pre-cure release layer composition; and curing the pre-cure release layer composition to form a release layer comprising a silicone polymer matrix, carbon black and a trisiloxane surfactant.

In some examples, the method of providing a release layer comprises coating a supportive portion of an intermediate transfer member with the pre-cure release layer composition. In some examples, the pre-cure release layer composition coated on a supportive potion of an intermediate transfer member may be cured to form an outer release layer comprising a silicone polymer matrix, carbon black and a trisiloxane surfactant. In some examples, coating a supportive portion of an intermediate transfer member with the pre-cure release layer composition involves rod coating or gravure coating of the supportive portion of the ITM with the pre-cure release layer composition.

In examples in which the pre-cure release layer comprises a volatile solvent, the pre-cure release composition, for example the pre-cure release composition coated on a supportive portion of an intermediate transfer member, may be heated to remove the volatile solvent, for example before the pre-cure release layer composition is cured. In some examples, the method of providing a release layer may comprise removal of the volatile solvent from the pre-cure release layer. Removal of the volatile solvent from the pre-cure release layer may comprise heating the pre-cure release layer, for example to a temperature of greater than about 50 °C, for example greater than about 55°C, or 60 °C or greater. In some examples, the pre-cure release layer may be heated to a temperature in the range of about 50-100 °C, for example, 55-90 °C, or 60-85 °C to remove volatile solvent from the pre-cure release layer composition. In some examples, removal of volatile solvent from the pre-cure release layer composition may comprise heating of the pre-cure release layer composition for about 1 min or more, for example about 2 mins or more, or about 3 mins or more. Heating may be carried out at standard pressure.

In some examples, curing of the pre-cure release layer composition may comprise heating the pre-cure release layer composition. In some examples, curing the pre-cure release layer composition comprises heating the pre-cure release layer composition to a temperature of about 100 °C or greater, for example about 120 °C or greater. In some examples, curing the pre-cure release layer composition comprises heating the pre-cure release layer composition to a temperature in the range of about 80 °C to about 200 °C, for example about 100 °C to about 150 °C, or about 120 °C. In some examples, curing involves heating the pre-cure release layer composition for at least about 20 mins, for examples at least about 30 mins, or about 1 hour or more. In some examples, curing involves heating the pre-cure release layer composition for a time in the range of about 20 mins to about 5 hours, for example about 30 mins to about 2 hours.

### Release Layer

The pre-cure release layer composition may be cured to form a release layer. The release layer may comprise a silicone polymer matrix, carbon black and a trisiloxane surfactant.

In some examples, the silicone polymer is the cross-linked product of a silicone oil and a cross-linker component. In some examples, the silicone polymer is the cross-linked product of a silicone oil, a cross-linker component and a cross-linking catalyst.

In some examples, the silicone polymer is a polysiloxane that has been cross-linked using an addition cure process such that it contains Si-X-Si bonds, where X is an alkylene moiety, for example -(CH₂)ₙ-, where n may be 2, 3, or 4.

In some examples, the silicone polymer comprises the cross-linked addition cured product of: at least one silicone oil having alkene groups linked to the silicone chain of the silicone oil; a cross-linker comprising a silicone hydride component; and, in some examples, an addition cure cross-linking catalyst.

In some examples, the silicone polymer comprises the cross-linked condensation cured product of at least one silicone oil, a condensation cure cross-linker component, and a condensation cure cross-linking catalyst.

In some examples, the silicone polymer comprises the UV or IR radiation cross-linked cured product of at least one silicone oil, a photo cross-linker, and a photo-initiator.

In some examples, the silicone polymer comprises the activated cross-linked cured product of at least one silicone oil, a cross-linker comprising a peroxide component, and an activated cure cross-linking catalyst.

### Intermediate Transfer Member (ITM)

An intermediate transfer member for use in an electrostatic printing processes may comprise an outer release layer comprising a silicone polymer matrix, carbon black and a trisiloxane surfactant.

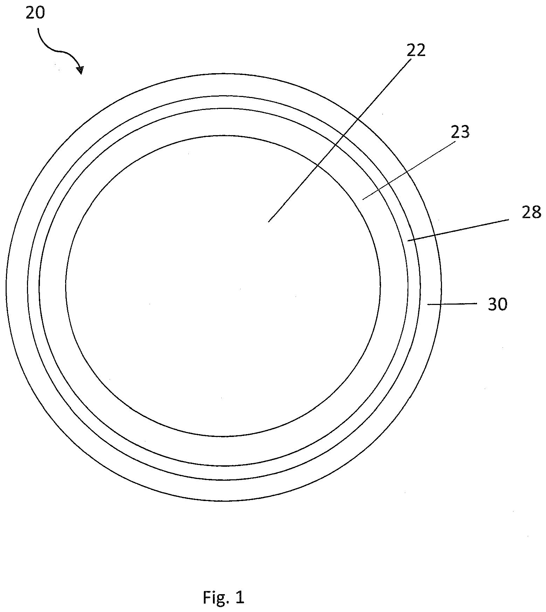

Figure 1 is a cross-sectional diagram of an example of an ITM. The ITM includes a supportive portion comprising a base 22 and a substrate layer 23 disposed on the base 22. The base 22 may be a metal cylinder. The ITM 20 also comprises a primer layer 28 disposed on the substrate layer 23, and an outer release layer 30 disposed on the primer layer 28.

The substrate layer 23 comprises a rubber layer which may comprise an acrylic rubber (ACM), a nitrile rubber (NBR), a hydrogenated nitrile rubber (HNBR), a polyurethane elastomer (PU), an EPDM rubber (an ethylene propylene diene terpolymer), a fluorosilicone rubber (FMQ or FLS), a fluorocarbon rubber (FKM or FPM) or a perfluorocarbon rubber (FFKM). For example, the rubber layer may comprise an at least partly cured acrylic rubber, for example an acrylic rubber comprising a blend of acrylic resin Hi-Temp 4051 EP (Zeon Europe GmbH, Niederkasseler Lohweg 177, 40547 Dusseldorf, Germany) filled with carbon black pearls 130 (Cabot, Two Seaport Lane, Suite 1300, Boston, MA 02210, USA) and a curing system which may comprise, for example, NPC-50 accelerator (ammonium derivative from Zeon).

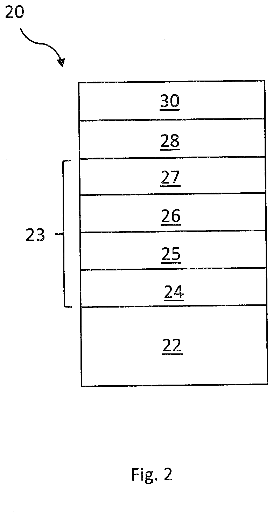

Figure 2 shows a cross-sectional view of an example of an ITM having a substrate layer 23 comprising an adhesive layer 24 disposed between the base 22 and a compressible layer 25 for joining the compressible layer 25 of the substrate layer 23 to the base 22, a conductive layer 26 may be disposed on the compressible layer 25, and a compliance layer 27 disposed on the conductive layer 26. The adhesive layer may be a fabric layer, for example a woven or non-woven cotton, synthetic, combined natural and synthetic, or treated, for example, treated to have improved heat resistance, material. In an example the adhesive layer 23 is a fabric layer formed of NOMEX material having a thickness, for example, of about 200 µm.

The compressible layer 25 may be a rubber layer which, for example, may comprise an acrylic rubber (ACM), a nitrile rubber (NBR), a hydrogenated nitrile rubber (HNBR), a polyurethane elastomer (PU), an EPDM rubber (an ethylene propylene diene terpolymer), or a fluorosilicone rubber (FLS).

The compliance layer 27 may comprise a soft elastomeric material having a Shore A hardness of less than about 65, or a Shore A hardness of less than about 55 and greater than about 35, or a Shore A hardness value of between about 42 and about 45. In some examples, the compliance layer 27 comprises a polyurethane or acrylic. Shore A hardness may be determined by ASTM standard D2240.

In some examples, the compliance layer comprises an acrylic rubber (ACM), a nitrile rubber (NBR), a hydrogenated nitrile rubber (HNBR), a polyurethane elastomer (PU), an EPDM rubber (an ethylene propylene diene terpolymer), a fluorosilicone rubber (FMQ), a fluorocarbon rubber (FKM or FPM) or a perfluorocarbon rubber (FFKM)

In an example the compressible layer 25 and the compliance layer 27 are formed from the same material.

The conductive layer 26 comprises a rubber, for example an acrylic rubber (ACM), a nitrile rubber (NBR), a hydrogenated nitrile rubber (HNBR), or an EPDM rubber (an ethylene propylene diene terpolymer), and one or more conductive materials. In some examples, the conductive layer 26 may be omitted, such as in some examples in which the compressible layer 25, the compliance layer 27, or the release layer 30 are partially conducting. For example, the compressible layer 25 and/or the compliance layer 27 may be made to be partially conducting with the addition of conductive carbon black or metal fibres.

The primer layer 28 may be provided to facilitate bonding or joining of the release layer 30 to the substrate layer 23. The primer layer 28 may comprise an organosilane, for example, an organosilane derived from an epoxysilane such as 3-glycidoxypropyl trimethylsilane, a vinyl silane such as vinyltriethoxysilane, a vinyltriethoxysilane, an allyl silane, or an unsaturated silane, and a catalyst such as a catalyst comprising titanium.

In an example, a curable primer layer is applied to a compliance layer 27 of a substrate layer 23, for example to the outer surface of a compliance layer 27 made from an acrylic rubber. The curable primer layer may be applied using a rod coating process. The curable primer may comprise a first primer comprising an organosilane and a first catalyst comprising titanium, for example an organic titanate or a titanium chelate. In an example the organosilane is an epoxysilane, for example 3-glycidoxypropyl trimethoxysilane (available from ABCR GmbH & Co. KG, Im Schlehert 10 D-76187, Karlsruhe, Germany, product code SIG5840) and vinyltriethoxysilane (VTEO, available from Evonik, Kirschenallee, Darmstadt, 64293, Germany), vinyltriethoxysilane, an allyl silane or an unsaturated silane. The first primer is curable by, for example, a condensation reaction. For example, the first catalyst for a silane condensation reaction may be an organic titanate such as Tyzor® AA75 (available from Dorf-Ketal Chemicals India Private Limited Dorf Ketal Tower, D'Monte Street, Orlem, Malad (W), Mumbai-400064, Maharashtra INDIA.). The primer may also comprise a second primer comprising an organosilane, e.g. a vinyl siloxane, such as a vinyl silane, for example vinyl triethoxy silane, vinyltriethoxysilane, an allyl silane or an unsaturated silane, and, in some examples, a second catalyst. The second primer may also be curable by a condensation reaction. In some examples, the second catalyst, if present, may be different from the first catalyst and in some examples comprises platinum or rhodium. For example, the second catalyst may be a Karstedt catalyst with, for example, 9% platinum in solution (available from Johnson Matthey, 5th Floor, 25 Farringdon Street, London EC4A 4AB, United Kingdom) or a SIP6831.2 catalyst (available from Gelest, 11 East Steel Road, Morrisville, PA 19067, USA).

In some examples, the second catalyst is a catalyst for catalysing an addition cure reaction. In such cases the second catalyst may catalyse an addition cure reaction of the pre-cure release composition to form the release layer 30 when the pre-cure release composition comprises at least one silicone oil having alkene groups linked to the silicone chain of the silicone oil, for example a vinyl functional siloxane and a cross-linker comprising a silicone hydride component.

The curable primer layer applied to the substrate layer 23 may comprise a first primer and/or a second primer. The curable primer layer may be applied to the substrate layer 23 as two separate layers, one layer containing the first primer and the other layer containing the second primer.

The rubbers of the compressible layer 25, the conductive layer 26 and/or the compliance layer 27 of the substrate layer 23 may be uncured when the curable primer layer is applied thereon.

The outer release layer 30 of the ITM 20 comprises a silicone polymer matrix, carbon black and a trisiloxane surfactant.

The outer release layer 30 may be formed on the ITM by applying a pre-cure release layer composition to the supportive portion of the ITM. For example, the outer release layer may be applied to the substrate layer 23 or on top of a curable primer layer which has already been applied to the substrate layer 23.

Once cured, the ITM comprises an outer release layer 30 disposed on a substrate layer 23, or, if present, disposed on a primer layer 28.

### Electrostatic printing apparatus

Also described herein is an electrostatic printing apparatus, e.g. a liquid electrophotographic (LEP) printing apparatus. The printing apparatus may comprise an intermediate transfer member (ITM) comprising an outer release layer. In some examples, the printing apparatus comprises a photoconductive member having a surface on which a latent electrostatic image can be created; and an intermediate transfer member comprising an outer release layer comprising a silicone polymer matrix, carbon black and a trisiloxane surfactant. The printing apparatus may be adapted, in use, on contacting the surface of the photoconductive member with an electrostatic ink composition to form a developed image on the surface of the latent electrostatic image, then transfer the developed image to the outer release layer of intermediate transfer member, and then transfer the developed image from the outer release layer of the intermediate transfer member to a print substrate.

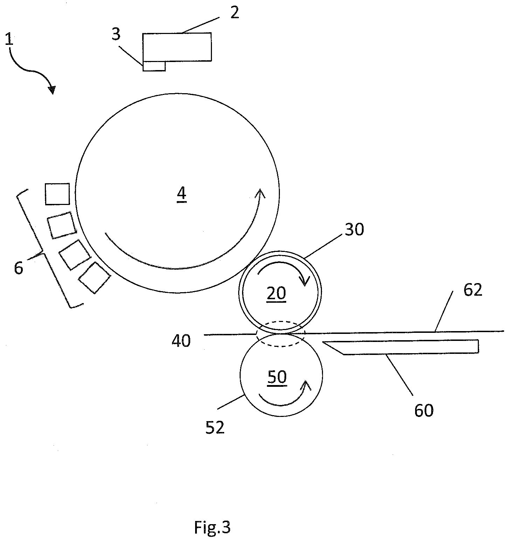

Figure 3 shows a schematic illustration of an example of a LEP printing apparatus 1. An image, including any combination of graphics, text and images, is communicated to the LEP 1. The LEP includes a photo charging unit 2 and a photo-imaging cylinder 4. The image is initially formed on a photo-conductive member in the form of a photo-imaging cylinder 4 before being transferred to an outer release layer 30 of the ITM 20 which is in the form of a roller (first transfer), and then from the outer release layer 30 of the ITM 20 to a print substrate 62 (second transfer).

According to an illustrative example, the initial image is formed on a rotating photo-imaging cylinder 4 by the photo charging unit 2. Firstly, the photo charging unit 2 deposits a uniform static charge on the photo-imaging cylinder 4 and then a laser imaging portion 3 of the photo charging unit 2 dissipates the static charges in selected portions of the image area on the photo-imaging cylinder 4 to leave a latent electrostatic image. The latent electrostatic image is an electrostatic charge pattern representing the image to be printed. Ink is then transferred to the photo-imaging cylinder 4 by Binary Ink Developer (BID) units 6. The BID units 6 present a uniform film of ink to the photo-imaging cylinder 4. The ink contains electrically charged pigment particles which, by virtue of an appropriate potential on the electrostatic image areas, are attracted to the latent electrostatic image on the photo-imaging cylinder 4. The ink does not adhere the uncharged, non-image areas and forms a developed image on the surface of the latent electrostatic image. The photo-imaging cylinder 4 then has a single colour ink image on its surface.

The developed image is then transferred from the photo-imaging cylinder 4 to the outer release layer 30 of the ITM 20 by electrical forces. The image is then dried and fused on the outer release layer 30 of the ITM 20 before being transferred from the outer release layer 30 of the ITM 20 to a print substrate wrapped around an impression cylinder 50. The process may then be repeated for each of the coloured ink layers to be included in the final image.

The image is transferred from the photo-imaging cylinder 4 to the ITM 20 by virtue of an appropriate potential applied between the photo-imaging cylinder 4 and the ITM 20, such that the charged ink is attracted to the ITM 20.

Between the first and second transfers the solid content of the developed image is increased and the ink is fused on to the ITM 20. For example, the solid content of the developed image deposited on the outer release layer 30 after the first transfer is typically around 20%, by the second transfer the solid content of the developed image is typically be around 80-90%. This drying and fusing is typically achieved by using elevated temperatures and airflow assisted drying. In some examples, the ITM 20 is heatable.

The print substrate 62 is fed into the printing apparatus by the print substrate feed tray 60 and is wrapped around the impression cylinder 50. As the print substrate 62 contacts the ITM 20, the developed image is transferred from the ITM 20 to the print substrate 62.

### Examples

The following illustrates examples of the compositions, release layers, intermediate transfer members (ITMs), methods and related aspects described herein. Thus, these examples should not be considered to restrict the present disclosure, but are merely in place to teach how to make examples of compositions of the present disclosure.

### Pre-cure release layer composition

### Reference Example 1

A pre-cure release layer composition was prepared by providing 1000 g of silicone oil (800 grams of Dimethylsiloxane vinyl terminated (vs500), and 200 grams of Vinylmethylsiloxane - Dimethylsiloxane Copolymer vinyl terminated (xprv5000)). 25 g of conductive carbon black (Ketjenblack EC600JD) was added to the silicone oil.

### Example 1

A pre-cure release layer composition was prepared by providing 1000 g of silicone oil (800 grams of Dimethylsiloxane vinyl terminated (vs500), and 200 grams of Vinylmethylsiloxane - Dimethylsiloxane Copolymer vinyl terminated (xprv5000)). 25 g (2.5 wt.% by weight of silicone oil) of conductive carbon black (Ketjenblack EC600JD) and 10 g (1 wt.% by weight of silicone oil) trisiloxane surfactant (Silwet-77 available from Dow Corning) was added to the silicone oil.

### Example 2

A pre-cure release layer composition was prepared by providing 1000 g of silicone oil (800 grams of Dimethylsiloxane vinyl terminated (vs500), and 200 grams of Vinylmethylsiloxane - Dimethylsiloxane Copolymer vinyl terminated (xprv5000)). 25 g (2.5 wt.% by weight of silicone oil) of conductive carbon black (Ketjenblack EC600JD) and 20 g (2 wt.% by weight of silicone oil) trisiloxane surfactant (Silwet-77 available from Dow Corning) was added to the silicone oil.

### Example 3

A pre-cure release layer composition was prepared by providing 1000 g of silicone oil (800 grams of Dimethylsiloxane vinyl terminated (vs500), and 200 grams of Vinylmethylsiloxane - Dimethylsiloxane Copolymer vinyl terminated (xprv5000)). 25 g (2.5 wt.% by weight of silicone oil) of conductive carbon black (Ketjenblack EC600JD) and 25 g (2.5 wt.% by weight of silicone oil) trisiloxane surfactant (Silwet-77 available from Dow Corning) was added to the silicone oil.

### Example 4

A pre-cure release layer composition was prepared by providing 1000 g of silicone oil (800 grams of Dimethylsiloxane vinyl terminated (vs500), and 200 grams of Vinylmethylsiloxane - Dimethylsiloxane Copolymer vinyl terminated (xprv5000)). 25 g (2.5 wt.% by weight of silicone oil) of conductive carbon black (Ketjenblack EC600JD) and 30 g (3 wt.% by weight of silicone oil) trisiloxane surfactant (Silwet-77 available from Dow Corning) was added to the silicone oil.

Each of the pre-cure release layer compositions of Reference Example 1 and Examples 1-4 were processed by high shear mixer for 6 minutes at shear rate of 6000 rpm and their viscosity was measured by a Brookfield DV-II+ programmable viscometer spindle LV-3 (SP 63).

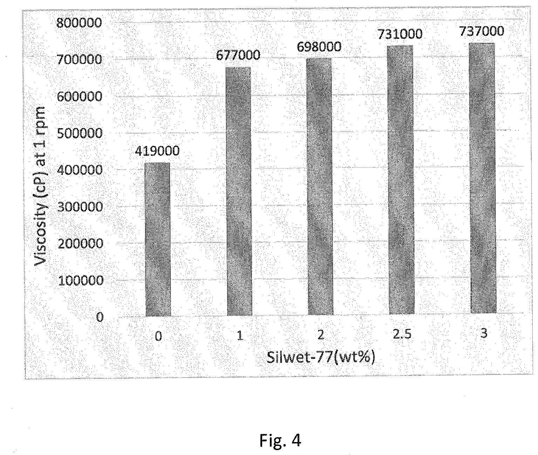

Figure 4 shows viscosity of each of the pre-cure release layer compositions at 1 rpm as a function of trisiloxane surfactant (Silwet- L77) content at constant concentration of carbon black of 2.5% parts by weight (relatively to 100 parts by weight of vs500+XPRV5000 (80: 20 ratio)).

Figure 4 demonstrates a significant increase in the viscosity of the pre-cure release layer compositions containing carbon black suspended in silicone oil as a function of trisiloxane surfactant (Silwet-L77) content, indicating better dispersion of the carbon black with the additional of a trisiloxane surfactant. The detected viscosity increase is an indication of the formation of smaller carbon black particles with a larger surface area. The viscosity values appear to reach a plateau at a concentration of greater than about 2.5 parts by weight of Silwet L77.

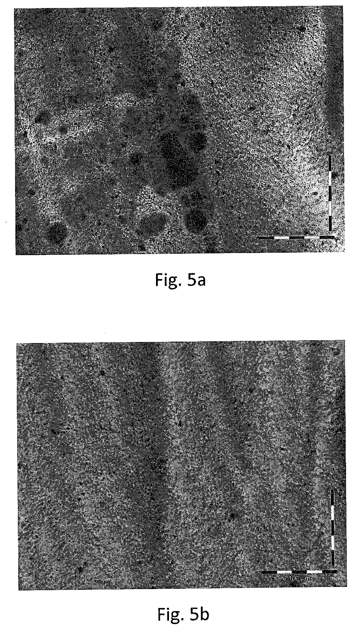

Optical microscopy observations (magnification of X200) were carried out on the processed compositions of Reference Example 1 and Example 3, which support the obtained viscosity data (Figure 5, the bars are 100 µm sized). Low dispersion quality of carbon black was achieved at carbon black concentration of 2.5 parts by weight processed by shear mixing in silicone oil only (composition of Reference Example 1), as shown in Fig. 5a, where large and unprocessed agglomerates of carbon black can be easily detected. However, figure 5b shows a fine dispersion with continuous array of small particles of carbon black at a carbon black concentration of 2.5 parts by weight of silicone oil in the presence of 2.5 parts by weight of silicone oil of a trisiloxane surfactant (Silwet L77) (composition of Example 3).

### Release layer formed from a pre-cure release layer composition

### Example 5

The processed pre-cure release layer composition of Example 3 was diluted by adding 700 g isopropanol (70 parts by weight isopropanol relative to 100 parts by weight silicone oil) and mixing for 2 mins at 6000 rpm. 100 g Hydride siloxane Crosslinker 210, 50 g Inhibitor 600 and 5 gr Karstedt solution 0.5% Pt were then added to the diluted pre-cure release layer composition (formulation as set out in table 1 below). The viscosity of the resulting pre-cure release layer composition was 38000 cP at 1 rpm, as measured by a Brookfield DV-II+ programmable viscometer spindle LV-3 (SP 63). The composition therefore had a viscosity suitable for gravure coating onto a ITM supportive potion.

**Table 1. Example 5 pre-cure release composition**

| Materials | Mass (g) | Dynamic Viscosity (mPa•s) | Functional group content | Supplier |
|---|---|---|---|---|
| Dimethylsiloxane vinyl terminated (vs500) | 800 | 500 | 0.14 Vinyl (mmole/g) | ABCR |
| Vinylmethylsiloxane - Dimethylsiloxane Copolymer vinyl terminated (xprv5000) | 200 | 3000 | 0.4 Vinyl (mmole/g) | |
| Hydride siloxane Crosslinker 210 | 100 | 900 | 4.2 SiH (mmole/g) | ABCR |
| Inhibitor 600 | 50 | 900 | 0.11 Vinyl (mmole/g) | |
| Karstedt solution 0.5% Pt | 5 | 500 | 0.14 Vinyl (mmole/g) | ABCR |
| Silwet-L77 | 25 | | | Dow Corning |
| Conductive Carbon black Ketjenblack EC600JD | 25 | | | |
| Isopropanol | 700 | | | |

The pre-cure release composition was then gravure coated onto a ITM supportive portion to form a ITM having the following structure from bottom to top (top is a release layer, bottom is a layer which is in contact with a metal ITM drum):
1. Fabric based support layer.
2. Rubber based compressible layer (NBR from ContiTech AG Vahrenwalder Str. 9 30165 Hannover Germany).
3. Rubber based conductive layer (NBR from ContiTech)
4. Rubber based soft compliance layer (ACM from ContiTech)
5. Primer layer (gravure coated on substrate (rubber layer no 4) and formed layer by layer). Primer formulation is described in table 2 below.
6. Pre-cure release layer composition as described in table 1 above.

The primer layer was formed by gravure coating the soft compliance layer (layer 4) of the ITM with a primer having the composition shown in table 2 below, the primer containing a first primer and a second primer mixed together.

**Table 2. Primer composition.**

| **Materials of primer** | **Wt.% in formulation** | **Supplier** |
|---|---|---|
| 3Glycidoxypropyl) trimethoxysilane | 52 | ABCR |
| Vinyltrimethoxysilane | 35 | ABCR |
| Tyzor AA75 | 10 | Dorf Ketal |
| Karstedt solution 9% Pt | 3 | Johnson Matthey |

A pre-cure release layer composition having the composition shown in Table 1 (as described above) was then provided on the primer layer using a gravure coating process.

After the coating process was complete, the whole ITM was placed in an oven at 60 C for a few minutes to remove isopropanol from the pre-cure release layer composition and then the whole ITM was placed in an oven at 120 °C for 1.5 hours to cure.

### Reference Example 2

An ITM was formed in the same way as Example 5, except that no trisiloxsane surfactant or isopropanol was added and 10 g of carbon black was added instead of 25 g carbon black. The viscosity of the resulting pre-cure composition (before application to the ITM supportive portion) was 40000 cP at 1 rpm, as measured by a Brookfield DV-II+ programmable viscometer spindle LV-3 (SP 63).

### Reduction of Negative Dot Gain (NDG)

Negative dot gain memory is a failure on grey levels when the ex-image area is brighter than the ex-background area, that is, dot gain in the ex-image area is smaller than in the ex-background area. A negative dot gain memory of the release layer will appear as lighter ghost images of the ex-images area compared to a subsequently printed grey monitor image.

The effect on incorporation of carbon black and a trisiloxane surfactant into the outer release layer of an ITM on NDG formation was tested by incorporating the ITMs of Example 5 and Reference Example 2 into a printing apparatus, in this example the HP Indigo 7500 digital press.

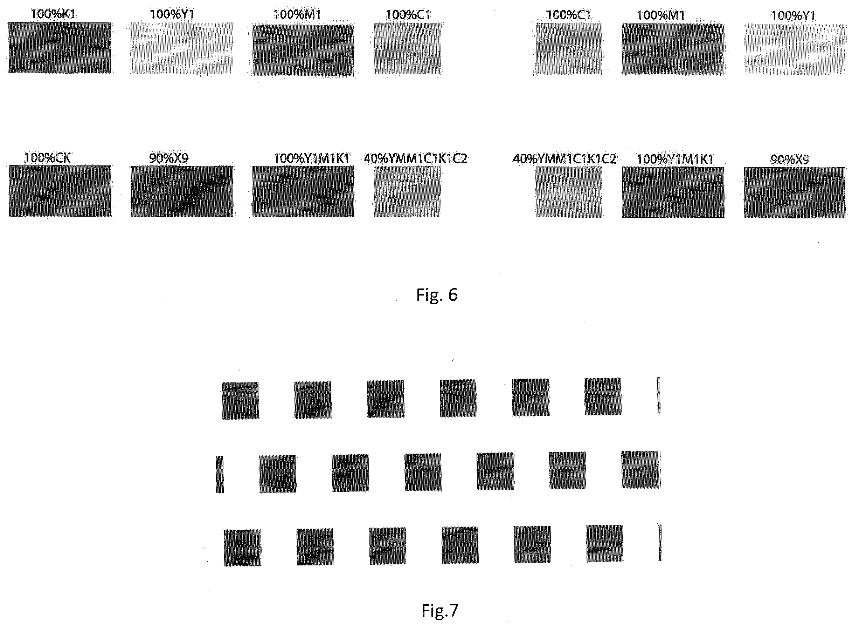

2000 copies of an image comprising different coloured rectangles were printed using the HP Indigo 7500 digital press for each of the ITMs of Example 5 and Reference Example 2. Figure 6 provides an illustration of the image printed (K denotes black, Y denotes yellow, M denotes magenta, C denotes cyan using black, yellow, cyan and magneta Electolnk® 4.5 (available from HP Indigo).

Following the printing of multiple copies of the image illustrated in figure 6 using both ITMs, grey monitor prints were printed using both ITMs. The grey monitor print produced using the printing apparatus comprising the ITM produced according to Reference Example 2 showed clear ghost rectangles on the grey image, the ghost rectangles being lighter than the remaining grey image, indicating NDG of the outer release layer of the ITM having an outer release layer containing no trisiloxane surfactant. The grey monitor print produced using the printing apparatus comprising the ITM produced according to Example 5 showed a grey image with barely visible lighter ghost rectangles. Therefore, the outer release layer containing carbon black and a trisiloxane surfactant showed a greatly reduced NDG.

### Reduction of short term memory

If a short term memory is created in the outer release layer of the ITM, this results in a visual pattern of a previous image in a developed image formed on a print substrate.

10 copies of an image comprising a plurality of black squares were printed using the HP Indigo 7500 digital press for each of the ITMs of Example 5 and Reference Example 2. Figure 7 provides an illustration of the image printed using black Electolnk® 4.5 (available from HP Indigo).

Following the printing of multiple copies of the image illustrated in figure 7 using both ITMs, grey monitor prints were printed using both ITMs. The grey monitor print produced using the printing apparatus comprising the ITM produced according to Reference Example 2 showed clear ghost squares on the grey image, the ghost squares being darker than the remaining grey image, indicating the short term memory of the outer release layer of the ITM having an outer release layer containing no trisiloxane surfactant. The grey monitor print produced using the printing apparatus comprising the ITM produced according to Example 5 showed a grey image with barely visible darker ghost squares. Therefore, the outer release layer containing carbon black and a trisiloxane surfactant showed a greatly reduced short term memory.

The present inventors also tested other surfactants, such as non-ionic sorbitan esters, polyethoxilated sorbitan esters, Brij surfactants and dimethicone surfactants which were not found to provide the improvements shown by a trisiloxane surfactant.

It is intended, that the compositions, release layers, intermediate transfer members (ITMs), methods and related aspects be limited only by the scope of the following claims. Unless otherwise stated, the features of any dependent claim can be combined with the features of any of the other dependent claims, and any other independent claim.

## Claims

1. An intermediate transfer member (ITM) (20) for use in an electrostatic printing processes, the intermediate transfer member comprising an outer release layer (30) comprising a silicone polymer matrix, carbon black and a trisiloxane surfactant.

2. An ITM according to claim 1, wherein the release layer comprises at least about 1.5 wt.% carbon black by total weight of silicone polymer.

3. An ITM according to claim 1, wherein the trisiloxane surfactant has a hydrophilic-lipophilic balance (HLB) in the range of about 9 to about 13.

4. An ITM according to claim 1, wherein the trisiloxane surfactant comprises a polyalkyleneoxide modified heptametyltrisiloxane.

5. An ITM according to claim 1, wherein the trisiloxane surfactant comprises a compound of formula (II) 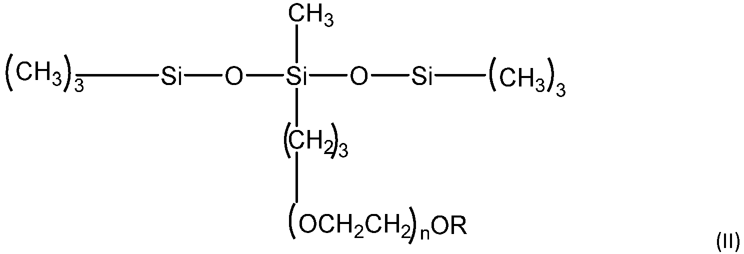 wherein n is an integer of at least 1; and
R is alkyl.

6. An ITM according to claim 1, wherein the silicone polymer is the cross-linked product of a silicone oil, a cross-linker component and a cross-linking catalyst.

7. An ITM according to claim 1, wherein the silicone polymer comprises the cross-linked addition cured product of: at least one silicone oil having alkene groups linked to the silicone chain of the silicone oil; a cross-linker comprising a silicone hydride component; and, an addition cure cross-linking catalyst.

8. A pre-cure release layer composition comprising:
a silicone oil;
carbon black; and
a trisiloxane surfactant.

9. A composition according to claim 8 comprising at least about 1.5 wt.% carbon black by total weight of silicone oil.

10. A composition according to claim 8 further comprising a volatile solvent.

11. A composition according to claim 8 having a viscosity in the range of about 1000 to about 50 000 mPa•s.

12. A composition according to claim 8, wherein the trisiloxane surfactant comprises a polyalkyleneoxide modified heptametyltrisiloxane.

13. A composition according to claim 8, wherein the trisiloxane surfactant comprises a compound of formula (II) 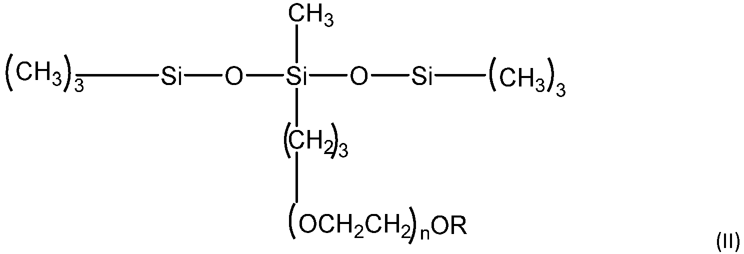
wherein n is an integer of at least 1; and
R is alkyl.

14. A composition according to claim 8, wherein the amount of carbon black and trisiloxane surfactant are such that the ratio of carbon black to trisiloxane surfactant is in the range of about 3:1 to about 1: 3.

15. An electrostatic printing apparatus (1) comprising:
a photoconductive member having a surface on which a latent electrostatic image can be created; and
an intermediate transfer member (20) comprising an outer release layer (30) comprising a silicone polymer matrix, carbon black and a trisiloxane surfactant,
wherein the electrostatic printing apparatus is adapted, in use, on contacting the surface of the photoconductive member with an electrostatic ink composition to form a developed image on the surface of the latent electrostatic image, then transfer the developed image to the outer release layer of intermediate transfer member, and then transfer the developed image from the outer release layer of the intermediate transfer member to a print substrate.

## Patentansprüche

1. Zwischenübertragungselement (ITM) (20) zur Verwendung in einem elektrostatischen Druckverfahren, wobei das Zwischenübertragungselement eine äußere Trennschicht (30) umfasst, die eine Silikonpolymermatrix, Ruß und ein Trisiloxan-Tensid umfasst.

2. ITM nach Anspruch 1, wobei die Trennschicht mindestens etwa 1,5 Gew.-% Ruß bezogen auf das Gesamtgewicht des Silikonpolymers umfasst.

3. ITM nach Anspruch 1, wobei das Trisiloxan-Tensid ein hydrophil-lipophiles Gleichgewicht (HLB) im Bereich von etwa 9 bis etwa 13 aufweist.

4. ITM nach Anspruch 1, wobei das Trisiloxan-Tensid ein mit Polyalkylenoxid modifiziertes Heptametyltrisiloxan umfasst.

5. ITM nach Anspruch 1, wobei das Trisiloxan-Tensid eine Verbindung der folgenden Formel (II) umfasst: 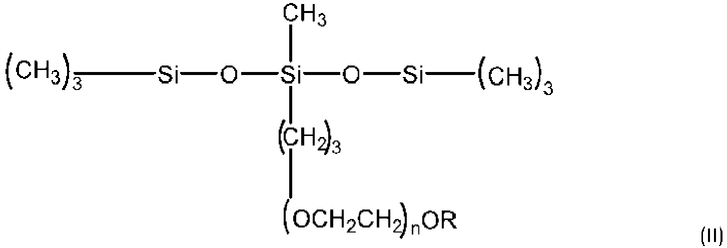
wobei n eine Ganzzahl von mindestens 1 ist; und
R ein Alkyl ist.

6. ITM nach Anspruch 1, wobei das Silikonpolymer das vernetzte Produkt aus einem Silikonöl, einer Vernetzungskomponente und einem Vernetzungskatalysator ist.

7. ITM nach Anspruch 1, wobei das Silikonpolymer das vernetzte additionsgehärtete Produkt aus Folgendem umfasst: mindestens einem Silikonöl mit Alkengruppen, die an die Silikonkette des Silikonöls gebunden sind; einem Vernetzungsmittel, das eine Silikonhydridkomponente enthält; und einem Additionshärtungsvernetzungskatalysator.

8. Vorhärtungstrennschichtzusammensetzung, umfassend:
ein Silikonöl;
Ruß; und
ein Trisiloxan-Tensid.

9. Zusammensetzung nach Anspruch 8, die mindestens etwa 1,5 Gew.-% Ruß, bezogen auf das Gesamtgewicht des Silikonöls umfasst.

10. Zusammensetzung nach Anspruch 8, die ferner ein flüchtiges Lösungsmittel umfasst.

11. Zusammensetzung nach Anspruch 8, die eine Viskosität im Bereich von etwa 1000 bis etwa 50 000 mPa•s aufweist.

12. Zusammensetzung nach Anspruch 8, wobei das Trisiloxan-Tensid ein mit Polyalkylenoxid modifiziertes Heptametyltrisiloxan umfasst.

13. Zusammensetzung nach Anspruch 8, wobei das Trisiloxan-Tensid eine Verbindung der folgenden Formel (II) umfasst: 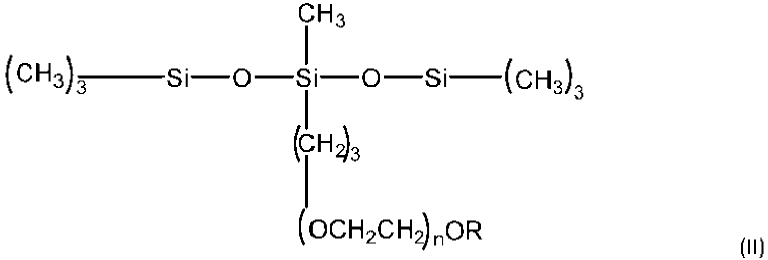
wobei n eine Ganzzahl von mindestens 1 ist; und
R ein Alkyl ist.

14. Zusammensetzung nach Anspruch 8, wobei die Menge an Ruß und Trisiloxan-Tensid so bemessen ist, dass das Verhältnis von Ruß zu Trisiloxan-Tensid im Bereich von etwa 3:1 bis etwa 1:3 liegt.

15. Elektrostatische Druckvorrichtung (1), die Folgendes umfasst:
ein photoleitendes Element mit einer Oberfläche, auf der ein latentes elektrostatisches Bild erzeugt werden kann; und
ein Zwischenübertragungselement (20) mit einer äußeren Trennschicht (30), die eine Silikonpolymermatrix, Ruß und ein Trisiloxan-Tensid umfasst,
wobei die elektrostatische Druckvorrichtung im Betrieb eingestellt ist, um bei Kontakt der Oberfläche des photoleitenden Elements mit einer elektrostatischen Tintenzusammensetzung ein entwickeltes Bild auf der Oberfläche des latenten elektrostatischen Bildes zu erzeugen, dann das entwickelte Bild auf die äußere Trennschicht des Zwischenübertragungselements zu übertragen und anschließend das entwickelte Bild von der äußeren Trennschicht des Zwischenübertragungselements auf ein Drucksubstrat zu übertragen.

## Revendications

1. Élément de transfert intermédiaire (ITM) (20) destiné à être utilisé dans un processus d'impression électrostatique, l'élément de transfert intermédiaire comprenant une couche de libération externe (30) comprenant une matrice polymère de silicone, du noir de carbone et un tensioactif trisiloxane.

2. ITM selon la revendication 1, dans lequel la couche de libération comprend au moins environ 1,5 % en poids de noir de carbone par poids total de polymère de silicone.

3. ITM selon la revendication 1, dans lequel le tensioactif trisiloxane présente un équilibre hydrophile-lipophile (HLB) dans la plage d'environ 9 à environ 13.

4. ITM selon la revendication 1, dans lequel le tensioactif trisiloxane comprend un heptamétyltrisiloxane modifié par un polyalkylèneoxyde.

5. ITM selon la revendication 1, dans lequel le tensioactif trisiloxane comprend un composé de formule (II) 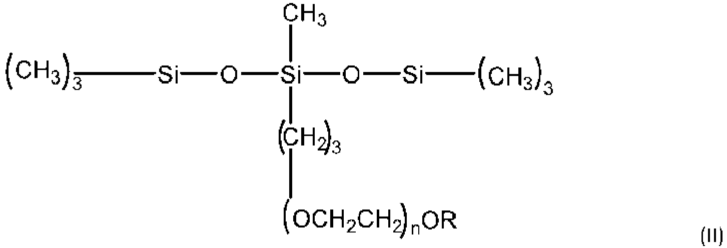
dans laquelle n est un entier d'au moins 1 ; et
R est alkyle.

6. ITM selon la revendication 1, dans lequel le polymère de silicone est le produit réticulé d'une huile de silicone, d'un constituant d'agent de réticulation et d'un catalyseur de réticulation.

7. ITM selon la revendication 1, dans lequel le polymère de silicone comprend le produit réticulé durci par addition de : au moins une huile de silicone présentant des groupes alcènes liés à la chaîne de silicone de l'huile de silicone ; un agent de réticulation comprenant un constituant d'hydrure de silicone ; et un catalyseur de réticulation à durcissement par addition.

8. Composition de couche de libération pré-durcie comprenant :
une huile de silicone ;
du noir de carbone ; et
un tensioactif trisiloxane.

9. Composition selon la revendication 8, comprenant au moins environ 1,5 % en poids de noir de carbone par poids total d'huile de silicone.

10. Composition selon la revendication 8 comprenant en outre un solvant volatil.

11. Composition selon la revendication 8, présentant une viscosité dans la gamme d'environ 1 000 à environ 50 000 mPa•s.

12. Composition selon la revendication 8, dans laquelle le tensioactif trisiloxane comprend un heptamétyltrisiloxane modifié au polyalkylèneoxyde.

13. Composition selon la revendication 8, dans laquelle le tensioactif trisiloxane comprend un composé de formule (II) 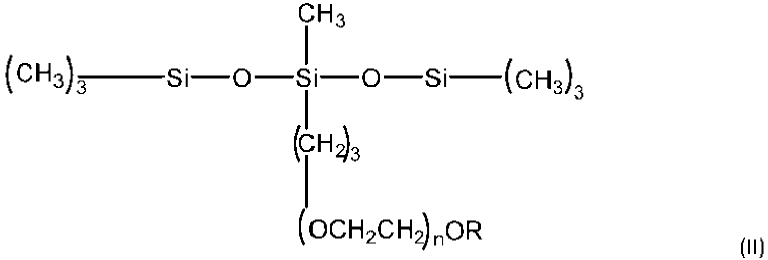
dans laquelle n est un entier d'au moins 1 ; et
R est alkyle.

14. Composition selon la revendication 8, dans laquelle la quantité de noir de carbone et de tensioactif trisiloxane est telle que le rapport du noir de carbone au tensioactif trisiloxane est compris entre environ 3:1 et environ 1:3.

15. Appareil d'impression électrostatique (1) comprenant :
un élément photoconducteur présentant une surface sur laquelle peut être créée une image électrostatique latente ; et
un élément de transfert intermédiaire (20) comprenant une couche de libération externe (30) comprenant une matrice de polymère de silicone, du noir de carbone et un tensioactif trisiloxane,
dans lequel l'appareil d'impression électrostatique est adapté, en cours d'utilisation, au contact de la surface de l'élément photoconducteur avec une composition d'encre électrostatique pour former une image révélée développée sur la surface de l'image électrostatique latente, puis pour transférer l'image révélée développée vers la couche de libération externe de l'élément de transfert intermédiaire, puis pour transférer l'image révélée développée depuis la couche de libération externe de l'élément de transfert intermédiaire vers un substrat d'impression.
